# DEMANDE DE BREVET EUROPEEN

(11) **EP 3 001 369 A1**
(43) Date de publication de la demande: **30.03.2016**
(21) Numéro de dépôt: 15186760.3
(22) Date de dépôt: 24.09.2015
(51) Int. Cl.: G06Q 10/06, G06Q 10/02, G06Q 10/10, G07C 11/00, G06Q 50/10

(54) **PROCÉDÉ ET SYSTÈME DE GESTION D'ACCUEIL**

(30) Priorité: 24.09.2014 FR 1459012
(71) Demandeur: ESII, 34880 Laverune (FR)
(72) Inventeur: ROSSI, Laurent, 34400 LUNEL (FR); RIEUX, Frédéric, 34800 CEYRAS (FR)
(74) Mandataire: Pontet Allano & Associes

(57) **Abrégé**

La présente invention concerne un procédé (100) de gestion de l'accueil de personnes dans un lieu, ledit procédé (100) comprenant :
- lors d'une phase, dite de délivrance :
- attribution (102) à au moins une personne d'un moyen d'accueil apte à émettre de manière sans fil un signal d'identification,
- lecture (104) d'une donnée d'identification dudit moyen d'accueil,
- inscription (106) de ladite donnée d'identification dans une file d'attente ;

- lors d'une phase, dit d'appel :
- sélection (110) de ladite donnée d'identification dans la file d'attente, et
- détection (116) dudit moyen d'accueil en fonction de ladite donnée d'identification et dudit signal d'identification.

Elle concerne également un système mettant en oeuvre un tel procédé.

## Description

### Domaine technique

La présente invention concerne un procédé de gestion de l'accueil de personnes dans un lieu. Elle concerne également un système mettant en oeuvre un tel procédé.

Le domaine de l'invention est le domaine de la gestion d'accès à un service rendu par un opérateur, un guichet, un comptoir, une caisse, etc. dans des lieux divers tels qu'un magasin, un supermarché, une gare, un aéroport, etc.

### État de la technique

Il existe actuellement différentes techniques de gestion de l'accueil des personnes dans divers lieux tels que les magasins, les supermarchés, les gares, les aéroports, etc.

On connait par exemple des bornes permettant de distribuer, à chaque personne, un ticket comportant un numéro d'appel en fonction de son besoin. La personne est alors invitée à patienter jusqu'à ce que le numéro indiqué sur le ticket soit appelé. Lorsque le numéro est appelé, ce dernier est affiché sur un écran d'affichage, avec éventuellement une indication concernant le point de service auquel la personne est appelée. Cette technologique de gestion d'appel fonctionne également de manière dématérialisée. En effet, il est maintenant possible de prendre un ticket « virtuel » ou « électronique », sur place ou à distance du lieu où le service souhaité est accessible au travers d'un réseau de communication.

Cette technologie présente également des inconvénients. Les tickets physiques nécessitent l'installation de bornes de distribution, qui présentent des coûts de fabrication et d'entretien non négligeables. De plus, les tickets physiques ne sont pas réutilisables et provoquent des déchets non négligeables et des coûts importants en termes de supports d'impression. Les tickets virtuels nécessitent une connexion à un serveur distant au moyen d'un Smartphone ou d'un ordinateur doté d'une application spécifique, ce qui n'est pas ergonomique. De plus, dans tous les cas, il est nécessaire de surveiller un écran affichant le numéro d'appel indiqué sur le ticket physique ou virtuel.

Il est également possible d'utiliser des appareils de type Smartphone, portés par les usagers, et permettant d'alerter les usagers au travers d'un réseau de communication sans fil, tel que le réseau de téléphonie mobile. Ces solutions nécessitent une connexion continue au réseau de communication sans fil, ce qui est impossible la plupart du temps. On connait enfin des dispositifs de gestion d'accueil utilisés notamment dans des lieux tels que des restaurants. La personne entrant dans le lieu se voit attribuer un dispositif d'appel sans fil au niveau d'une zone d'accueil. Dès que la personne peut être placée à une table, le dispositif d'appel émet un signal invitant la personne à retourner dans la zone d'accueil. Ces dispositifs ne sont pas ergonomiques et obligent les personnes à retourner vers la zone d'accueil ou vers un point fixe quelles que soient leurs positions.

Un but de la présente invention est de remédier aux inconvénients précités.

Un autre but de la présente invention est de proposer un procédé et un système de gestion d'accueil plus ergonomique.

Il est aussi un but de la présente invention de proposer un procédé et un système de gestion d'accueil présentant un coût d'installation et d'utilisation moins important que les systèmes actuels.

Encore, un autre but de la présente invention est de proposer un procédé et un système de gestion d'accueil produisant moins de déchets.

### Exposé de l'invention

L'invention permet d'atteindre au moins un de ces objectifs par un procédé de gestion de l'accueil de personnes dans un lieu, en particulier dans un lieu comprenant au moins un point de service, ledit procédé comprenant :
- lors d'une phase, dite de délivrance :
   - attribution à au moins une personne d'un moyen, dit d'accueil, dans ledit lieu, le ou chaque moyen d'accueil étant apte à émettre de manière sans fil un signal d'identification,
   - lecture d'une donnée d'identification dudit moyen d'accueil, et
   - inscription de ladite donnée d'identification dans une file d'attente mémorisée dans un moyen de mémorisation ;
- lors d'une phase, dit d'appel :
   - sélection de ladite donnée d'identification dans la file d'attente, et
   - détection dudit moyen d'accueil en fonction de ladite donnée d'identification et dudit signal d'identification.

Ainsi, le procédé selon l'invention propose d'attribuer à au moins une, préférentiellement, à chaque personne souhaitant accéder à un service un moyen d'accueil apte à émettre un signal d'identification et comportant un identifiant. L'identifiant est inscrit dans une liste d'attente. Lorsque le tour de la personne portant le moyen d'accueil arrive, le signal d'identification émis par le moyen d'accueil est détecté et la personne peut être localisée.

Ainsi, le procédé selon l'invention permet plus d'ergonomie car il permet à l'utilisateur d'éviter de surveiller un écran d'accueil. De plus, l'utilisateur peut être localisé, et /ou géolocaliser en utilisant plusieurs émetteurs (ou balises) disposés dans l'espace, par conséquent, le service souhaité peut lui être proposé au niveau de sa localisation ou au niveau d'un point de service le plus proche de sa localisation. La personne n'est donc pas obligée de revenir vers une zone d'accueil ou une zone prédéterminée.

En outre, le moyen d'accueil peut être réutilisé car il ne comporte aucun numéro d'ordre lié à une file d'attente. Par conséquent, le procédé selon l'invention ne produit pas de déchet.

Par ailleurs, le procédé selon l'invention ne nécessite pas l'installation de bornes de distribution complexes, et onéreuses d'installation et de maintenance. Par conséquent, le procédé selon l'invention permet une gestion d'accueil bien moins couteuse dans la durée que les procédés de l'état de la technique.

La liste d'attente dans laquelle sont mémorisés les identifiants des moyens d'accueil peut être gérée par un algorithme de gestion de file d'attente connue. En particulier, la liste d'attente peut être gérée de sorte que les identifiants sont sélectionnés en fonction de l'ordre dans lequel ils ont été inscrits dans la liste d'attente.

La liste d'attente peut comprendre une ou plusieurs sous-listes associées à un service spécifique. Alternativement, il peut y avoir plusieurs listes d'attente, chacune associée à un service spécifique, et l'identifiant d'un moyen d'accueil peut être inscrite dans la liste associé à un service préalablement sélectionné par l'utilisateur.

Suivant une caractéristique avantageuse, le procédé selon l'invention peut en outre comprendre :
- une étape d'émission, vers ledit moyen d'accueil, d'un signal, dit d'appel, et
- une étape de signalisation sonore et/ou visuelle et/ou par vibration, par ledit moyen d'accueil, suite à la réception dudit signal d'appel.

Le signal d'appel peut être émis par au moins un moyen d'émission relié ou géré par un serveur, par exemple central, gérant la liste d'attente dans laquelle la donnée d'identification du moyen d'accueil est inscrite. Le signal peut également être émis par une pluralité de moyens d'émission reliés ou gérés par un tel serveur et distribués dans le lieu.

La signalisation sonore peut être réalisée par au moins un haut-parleur ou tout moyen de génération d'un signal sonore équipant le moyen d'accueil. Par exemple, le moyen de signalisation sonore peut émettre un signal sonore permettant à un moyen de détection ou à un opérateur de le localiser. Alternativement ou en plus, le moyen de signalisation sonore peut indiquer une zone ou un identifiant d'une zone ou d'un point d'accès à un service.

La signalisation visuelle peut être réalisée par tout moyen de signalisation visuelle tel qu'au moins un écran d'affichage et/ou au moins un moyen lumineux de type LED équipant le moyen d'accueil. Par exemple, le moyen d'accueil peut émettre un signal lumineux permettant à un moyen de détection ou à un opérateur de le localiser. Alternativement ou en plus, le moyen de signalisation lumineux peut indiquer une zone ou un identifiant d'une zone ou d'un point d'accès à un service.

La signalisation par vibration peut être réalisée par tout moyen de vibration, tel qu'un moyen piézoélectrique.

Ainsi, le signal d'appel peut avantageusement comprendre un identifiant d'un point de service ou d'un opérateur, l'étape de signalisation sonore ou visuelle ou par vibration étant fonction dudit identifiant.

En outre, le signal d'appel peut être un signal émis, en particulier en broadcast, dans l'ensemble du site ou une zone du site, à destination de tous les moyens d'accueil se trouvant dans l'ensemble ou ladite zone du site. Dans ce cas, le signal d'appel peut comprendre la donnée d'identification du moyen d'accueil, par exemple inscrit dans une trame, permettant audit moyen d'accueil appelé de déterminer qu'il est concerné par le signal d'appel.

Suivant une version préférée mais nullement limitative, l'émission du signal d'identification par le moyen d'accueil peut être conditionnée à la réception, par le moyen d'accueil, d'un signal d'appel comprenant son identifiant. Autrement dit, le moyen d'accueil peut être en veille ou en écoute sans émettre le signal d'identification. Lorsque le moyen d'accueil reçoit un signal d'appel, ou une trame, comprenant son identifiant, il peut émettre le signal d'identification, soit de manière continue soit une seule fois ou encore de manière répétée à une fréquence prédéterminée.

Une telle version permet d'optimiser l'autonomie du moyen d'accueil et de diminuer la consommation électrique du moyen d'accueil.

Le procédé selon l'invention peut en outre comprendre, lors de la phase de délivrance, une étape d'activation, manuelle ou automatisée, d'un moyen d'émission sans fil du signal d'identification du moyen d'accueil. Lorsque le moyen d'émission sans fil est activé, cette activation peut entrainer ou non l'émission du signal d'identification. Tel que décrit plus haut, l'émission du signal d'identification peut être conditionné ou non à la réception d'un signal d'appel.

Ainsi, le moyen d'accueil n'est apte à émettre le signal d'identification que lorsqu'il est attribué à un utilisateur. Cela permet d'éliminer les signaux d'identification émis par les moyens d'accueil qui ne sont pas attribués.

L'activation du moyen d'émission sans fil peut être réalisée lors de prise du moyen d'accueil par l'utilisateur, par exemple au niveau d'une zone de délivrance du moyen d'accueil. Alternativement, l'activation du moyen d'émission sans fil peut être réalisée à tout moment après la prise du moyen d'accueil, lorsque l'utilisateur souhaite appeler.

Selon l'invention, l'étape de lecture de la donnée d'identification peut comprendre une lecture optique d'un moyen d'identification visuelle, de type code à barres, depuis le moyen d'accueil Par exemple, le moyen d'identification peut comporter un code à barre 1D ou 2D, tel qu'un QR Code, sur l'une de ses faces qui peut être lue par un lecteur optique.

Alternativement ou en plus, l'étape de lecture de la donnée d'identification peut comprendre une lecture par radiofréquence de la donnée d'identification depuis le moyen d'accueil, en particulier lorsque par exemple le moyen d'accueil et de type RFID.

Alternativement, l'étape de lecture de la donnée d'identification peut comprendre une émission/transmission de ladite donnée d'identification, dudit moyen d'accueil vers un serveur central, de manière sans fil.

L'étape de lecture de la donnée d'identification peut être réalisée lors de la délivrance du moyen d'accueil, par exemple au niveau d'une zone de délivrance du moyen d'accueil, ou à tout moment après la délivrance du moyen d'accueil, par exemple lorsque l'utilisateur souhaite être inscrit sur une file d'attente.

Selon un exemple de réalisation et lorsque la donnée d'identification est transmise de manière sans fil alors la transmission de la donnée d'identification peut être réalisée de manière automatisée lors de l'activation du moyen d'émission sans fil du moyen d'accueil. Par exemple, lors de l'activation du moyen d'émission sans fil, ce dernier peut être programmé pour émettre la donnée d'identification du moyen d'accueil vers un serveur qui la mémorise dans la file d'attente.

Selon un autre exemple de réalisation et lorsque la donnée d'identification est transmise de manière sans fil, alors la transmission de la donnée d'identification peut être réalisée sur demande de l'utilisateur par appui sur un moyen de déclenchement prévu à cet effet sur le moyen d'accueil. Par exemple, lorsque l'utilisateur souhaite être inscrit dans une file d'attente, il appuie sur un bouton dédié sur le moyen d'accueil, qui émet alors de l'activation du moyen d'émission sans fil, ce dernier peut être programmé pour émettre la donnée d'identification du moyen d'accueil vers un serveur qui la mémorise dans la file d'attente.

Avantageusement, au moins un, en particulier chaque, moyen d'accueil peut comprendre un moyen pour détecter de manière automatisée son attribution à un utilisateur.

Un tel moyen de détection peut par exemple comprendre un accéléromètre et/ou un inclinomètre et/ou tout autre moyen détecteur de mouvement disposé dans ou sur le moyen d'accueil. Ainsi, lorsque l'utilisateur se saisit du moyen d'accueil, le déplacement du moyen d'accueil est détecté.

Plus généralement, un tel moyen de détection peut comprendre un capteur actif, tel qu'un capteur magnétique, un capteur optique, etc. équipant ledit moyen d'accueil, et prévu pour coopérer avec un moyen passif, tel qu'un aimant ou une cible optique/visuel, équipant un socle ou un support recevant ledit moyen d'accueil avant qu'il ne soit attribué à un utilisateur, et en particulier pour détecter le déplacement dudit moyen d'accueil par rapport audit socle lors de son attribution à un utilisateur. L'utilisation d'un moyen passif du côté du socle/support permet d'utiliser un socle/support non alimenté en énergie électrique.

Suivant un exemple de réalisation préféré un tel moyen de détection peut comprendre un capteur magnétique, tel qu'un capteur à effet Hall, agencé pour détecter :
- la présence ou l'absence d'un aimant positionné sur/dans un socle ou un support sur/dans lequel ledit moyen d'accueil est disposé ; et/ou
- la variation d'un champ magnétique créé par un moyen, tel qu'un aimant ou une bobine, agencé sur/dans un socle ou un support sur/dans lequel ledit moyen d'accueil est disposé ;
avant d'être attribué à, pris par, un utilisateur.

Alternativement, le capteur peut être un capteur optique agencé dans le moyen d'accueil et détectant la présence ou l'absence d'une cible prévue sur le support.

La détection de l'attribution du moyen d'accueil à un utilisateur peut déclencher :
- l'étape de lecture et/ou l'étape d'inscription de la donnée d'identification du moyen d'accueil dans la liste d'attente, et/ou
- une activation du moyen d'émission sans fil du signal d'identification, avec émission ou non du signal d'identification.

Le procédé selon l'invention peut comprendre, lors de la phase d'appel, une étape de localisation dudit moyen d'accueil en fonction :
- de la force du signal d'identification émis par le moyen d'accueil, et/ou
- de la force d'une signalisation sonore ou visuelle au niveau dudit moyen d'accueil.
- d'un identifiant d'un(e) ou plusieurs récepteur(s) ou balise(s) plus proche recevant le signal d'identification émis par le moyen d'accueil.

Ainsi, en mesurant la force du signal d'identification ou de la signalisation sonore ou visuelle par un ou plusieurs moyens de détection adéquats installés sur le site et/ou porté(s) par un opérateur, il est possible de localiser le moyen d'accueil.

Alternativement ou en plus, la signalisation sonore ou visuelle peut être détectée et estimée directement par un opérateur qui n'est pas muni de moyens de détection ou de mesure dédiés.

L'étape d'attribution du moyen d'accueil peut comprendre une sélection par la personne d'un moyen d'accueil au niveau d'un point ou d'une zone de distribution, éventuellement en fonction d'un type de service souhaité par la personne parmi une pluralité de services.

Le ou les moyens d'accueil peuvent être en libre-service ou distribué(s) par un opérateur ou encore par un distributeur automatique.

Préférentiellement, l'émission du signal d'identification peut être réalisée selon le standard de communication Bluetooth.

Bien entendu, tout autre moyen/protocole d'émission sans fil ayant une portée convenable pour la taille du site concerné peut être utilisé.

Le procédé selon l'invention peut préférentiellement comprendre, suite à la phase d'appel, une phase de restitution du moyen d'accueil, ladite phase comprenant :
- une étape de remise du moyen d'accueil, et
- éventuellement, une étape de désactivation d'un moyen d'émission sans fil du moyen d'accueil.

Ainsi, le moyen d'accueil restitué peut être réutilisé par un autre utilisateur, éventuellement après une étape de nettoyage.

Selon un autre aspect de la même invention, il est proposé un système de gestion d'accueil de personnes dans un lieu, en particulier dans un lieu comprenant au moins un point de service, ledit système comprenant :
- une pluralité de moyens, dits d'accueil, munis chacun d'un moyen d'émission sans fil d'un signal d'identification et d'une donnée d'identification,
- une file d'attente pour mémoriser la donnée d'identification d'une pluralité desdits moyens d'accueil,
- au moins un moyen de détection sans fil dudit signal d'identification d'au moins un moyen d'accueil, et
- un serveur central ;
configurés pour mettre en oeuvre toutes les étapes du procédé selon l'invention.

L'au moins un moyen de détection peut comprendre une pluralité de détecteurs agencés à des emplacements distants dans ledit site.

L'au moins un moyen de détection peut alternativement ou en plus comprendre un moyen de détection portable, utilisable par un opérateur, en communication directe/indirecte, ou non, avec au moins un autre moyen de détection installé sur le site.

Un tel moyen de détection portable peut être un smartphone ou une tablette muni d'une antenne de détection signal émis par les moyens d'accueil tel qu'une antenne Bluetooth, une antenne WIFI, etc.

Au moins un moyen d'accueil peut comprendre un moyen de réception sans fil d'un signal d'appel et au moins un moyen de signalisation sonore ou visuel ou encore par vibration.

Le moyen de réception du signal d'appel peut être une antenne de détection d'un signal, telle qu'une antenne Bluetooth, une antenne WIFI, etc.

Le moyen de signalisation sonore peut comprendre au moins un haut-parleur ou tout moyen de génération d'un signal sonore.

Le moyen de signalisation visuel peut comprendre tout moyen de génération d'un signal lumineux tel qu'au moins un écran d'affichage et/ou au moins une diode ou LED.

Le moyen de signalisation par vibration peut par exemple comprendre un moyen mettant le moyen d'accueil en vibration, tel qu'un élément piézoélectrique.

Suivant un exemple de réalisation particulièrement avantageux, le moyen de signalisation visuel peut comprendre un écran d'affichage de type papier électronique ou mettant en oeuvre la technologie du papier électronique, également appelé l'encre électronique, tel qu'un écran à affichage électrophorétique ou à cristaux liquides bistables, équipé ou non d'un filtre optique coloré.

Un tel écran d'affichage consomme très peu d'énergie et permet d'augmenter l'autonomie du moyen d'accueil.

Préférentiellement, le moyen d'accueil peut se présenter sous la forme d'une carte ou d'un badge d'épaisseur négligeable par rapport à sa largeur ou sa longueur.

Le moyen d'accueil comprend donc un moyen d'émission d'un signal d'identification, telle que par exemple une antenne Bluetooth ou WIFI.

Le moyen d'accueil peut en outre comprendre :
- un moyen de mémorisation ou un moyen de génération du signal d'identification à émettre, et/ou
- éventuellement, un moyen de mémorisation d'une donnée d'identification et/ou un code visuel d'identification déposé sur une de ses surfaces externes, et/ou
- éventuellement, un moyen de réception d'un signal d'appel, tel que par exemple une antenne Bluetooth ou WIFI, et/ou
- éventuellement un moyen de détection automatisée de la prise dudit moyen d'accueil par un utilisateur ou de l'attribution dudit moyen d'accueil à un utilisateur, tel que par exemple au moins un accéléromètre et/ou au moins un inclinomètre et/ou un détecteur de mouvement, et/ou
- éventuellement un moyen de signalisation lumineux et/ou un moyen de signalisation sonore, et/ou
- une batterie alimentant au moins un élément dudit moyen d'accueil.

Le système selon l'invention peut en outre comprendre un socle, ou un support, prévu pour recevoir un ou plusieurs moyen(s) d'accueil, en attente de son(leur) attribution à un utilisateur.

Dans un exemple de réalisation particulièrement avantageux, mais nullement limitatif, du système selon l'invention :
- au moins un, en particulier chaque, moyen d'accueil peut être équipé d'un capteur actif, tel qu'un capteur magnétique un capteur optique, etc. ; et
- le support/socle peut être équipé d'un élément passif, tel qu'un aimant ou une cible optique/visuelle ;
coopérant ensemble pour réaliser une détection automatisée de l'attribution dudit moyen d'accueil à un utilisateur, ou la prise dudit moyen d'accueil par un utilisateur.

### Description des figures et modes de réalisation

D'autres avantages et caractéristiques apparaîtront à l'examen de la description détaillée d'exemples nullement limitatifs, et des dessins annexés sur lesquels :
- la FIGURE 1 est une représentation schématique des étapes d'un exemple de réalisation non limitatif du procédé selon l'invention ;
- la FIGURE 2 est une représentation schématique d'un exemple de réalisation non limitatif du système selon l'invention ; et
- la FIGURE 3 est une représentation schématique d'un exemple d'un moyen d'accueil pouvant être utilisé dans un procédé ou un système selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

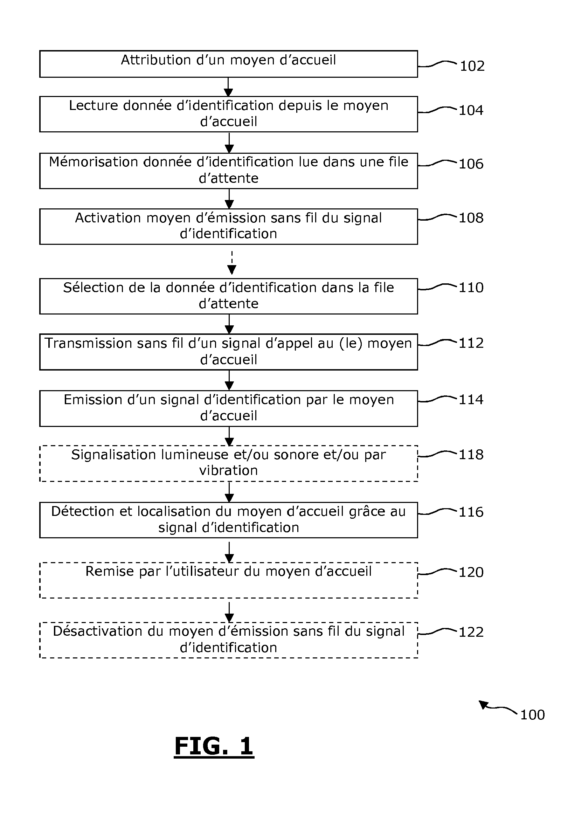

La FIGURE 1 est une représentation schématique d'un exemple de réalisation non limitatif d'un procédé.

Le procédé 100 représenté sur la FIGURE 1 comprend une étape 102 d'attribution d'un moyen d'accueil à un utilisateur. Lors de cette étape, le moyen d'accueil peut être remis à l'utilisateur par un opérateur ou un distributeur automatique. Alternativement, le moyen d'accueil peut être en libre-service pour l'utilisateur qui vient se saisir d'un moyen d'accueil au niveau d'une zone ou de plusieurs zones dans le lieu ou site concerné.

L'attribution d'un moyen d'accueil peut être fonction d'un service souhaité par l'utilisateur parmi une pluralité de services. Dans ce cas, le moyen d'accueil attribué à un utilisateur concerne uniquement un service donné.

Le procédé comprend ensuite une étape 104 pendant laquelle une donnée d'identification du moyen d'accueil attribué à un utilisateur est renseignée à un serveur central. Dans l'exemple présent, cette donnée d'identification est lue par radiofréquence, par un lecteur RFID depuis le moyen d'accueil

La donnée d'identification lue est ensuite mémorisée dans une file d'attente lors d'une étape 106, en fonction du moment de la lecture de la donnée d'identification et éventuellement d'un moment d'appel souhaité renseigné par l'utilisateur, par exemple dans 30 minutes ou dans 2 heures. La file d'attente, et en particulier, la sélection d'un identifiant dans la file d'attente peut être gérée par tout algorithme de gestion d'une file d'attente de l'état de la technique.

Lors d'une étape 108, le moyen d'émission d'un signal d'identification du moyen d'accueil est activé. Après activation, le moyen d'accueil 106 n'émet pas encore un signal d'identification. Les étapes 102-108 peuvent être réalisées dans un ordre différent de celui indiqué dans l'exemple présent. En effet, les étapes 104 et 106 peuvent par exemple être réalisées avant l'étape 102 d'attribution, ou après l'étape d'activation 108.

De plus les étapes 104-108 peuvent être réalisées sur demande de l'utilisateur de manière espacées dans le temps. Par exemple, l'utilisateur peut activer le moyen d'émission sans fil à l'étape 108 bien après les étapes 104 et 106. Alternativement, les étapes 104 et 106 peuvent être réalisées, par exemple de manière automatisée, après l'étape 108 d'activation du moyen d'émission sans fil.

De plus, l'étape d'attribution 102 peut comprendre une détection automatisée de l'attribution du moyen d'accueil à un utilisateur, soit par l'intermédiaire d'un opérateur ou par saisi dudit moyen d'accueil directement par l'utilisateur. Une telle détection automatisée peut être réalisée par l'utilisateur d'un capteur détectant le mouvement du moyen d'accueil, tel qu'un capteur à effet Hall, respectivement un capteur optique, coopérant avec un aimant, respectivement une cible optique, positionné dans un socle sur lequel le moyen d'accueil est positionné.

Les étapes 104-106 peuvent être déclenchées automatiquement par une telle détection automatisée d'attribution.

Les étapes 102-108 constituent une phase de délivrance du moyen d'accueil.

Après la phase de délivrance, le procédé 100 comprend une phase d'appel comprenant les étapes suivantes, et réalisée lorsque le tour d'utilisateur est arrivé.

Lors d'une étape 110, la donnée d'identification du moyen d'accueil mémorisée lors de l'étape 106 dans la file d'attente est sélectionnée.

Ensuite, lors d'une étape 112 un signal d'appel est émis par un ou des balises disposées dans l'espace. Ce signal d'appel comprend l'identifiant du moyen d'accueil, par exemple la donnée d'identification lue et mémorisée lors des étapes 104 et 106, ou une autre donnée d'identification mémorisée dans une base de données avec la donnée d'identification lue lors de l'étape 104.

Ce signal d'appel est reçu par l'ensemble des moyens d'accueil activés qui écoutent l'ensemble des signaux d'appels émis par les balises. Lorsqu'un moyen d'accueil écoutant un signal d'appel, détecte son identifiant dans le signal d'appel, il émet, lors d'une étape 114, un signal d'identification pour se signaler. Le signal d'identification peut comprendre la donnée d'identification lue et mémorisée lors des étapes 104 et 106, ou une autre donnée d'identification mémorisée dans une base de données avec la donnée d'identification lue lors de l'étape 104.

Ensuite, un ou plusieurs balises ou détecteurs sans fil tentent de détecter et localiser le signal d'identification émis par ce moyen d'accueil, lors d'une étape 116. Lors de cette étape 116 le moyen d'accueil est localisé en fonction de la force de réception, par la ou les balises, du signal d'identification émis par le moyen d'accueil, et éventuellement par triangulation.

Le procédé 100 représenté sur la FIGURE 1, peut également comprendre un ou des étapes optionnelles réalisées avant, après ou pendant l'étape de 116 de localisation.

Par exemple, lors d'une étape optionnelle 118, une signalisation lumineuse et/ou sonore est émise par le moyen d'accueil à destination de l'utilisateur portant ce moyen d'accueil. Cette signalisation sonore et/ou lumineuse peut par exemple aider un opérateur à localiser l'utilisateur portant le moyen d'accueil sur le site concerné. Alternativement ou en plus, la signalisation peut indiquer l'identifiant d'une zone ou d'un point de service, tel qu'un comptoir ou une caisse de supermarché, de sorte que l'utilisateur est invité à se rapprocher de cette zone ou de ce point de service. La signalisation lumineuse peut être réalisée par tout moyen d'émission d'un signal lumineux, tel qu'une ou une série de diodes ou encore un écran d'affichage équipant le moyen d'accueil. La signalisation sonore peut être réalisée par tout moyen d'émission d'une onde sonore tel qu'un haut-parleur équipant le moyen d'accueil.

Le procédé 100 représenté sur la FIGURE 1 comprend ensuite une phase de restitution optionnelle du moyen d'accueil. Cette phase de restitution comprend :
- une étape 120 lors de laquelle l'utilisateur remet le moyen d'accueil qui lui a été attribué à un opérateur ou dans un contenant ou une machine prévu(e) à cet effet, et
- une étape 122 de désactivation du moyen d'émission sans fil du moyen d'accueil.

Ainsi, le moyen d'accueil restitué peut être réutilisé par un autre utilisateur, éventuellement après une étape de nettoyage.

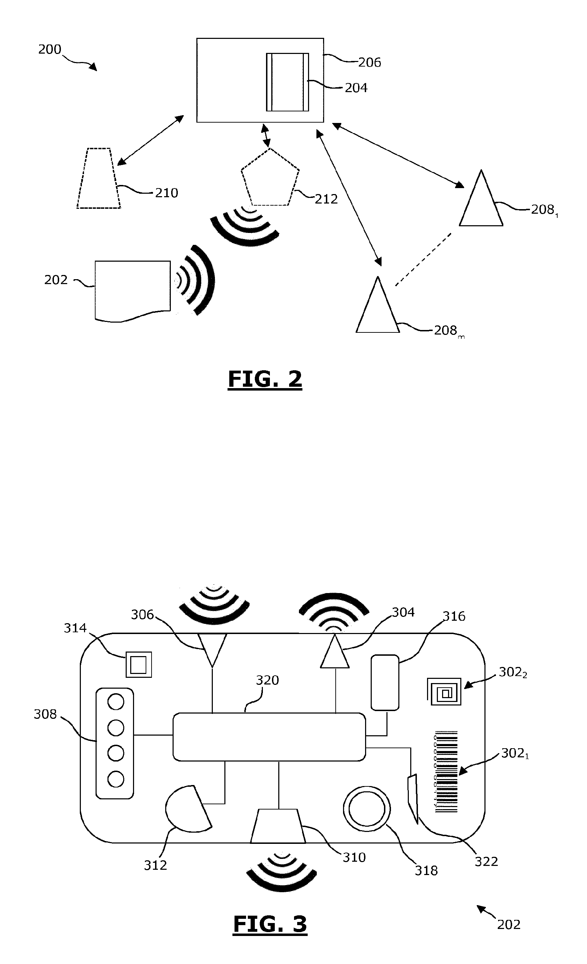

La FIGURE 2 est une représentation schématique d'un exemple non limitatif d'un système.

Le système 200 représenté sur la FIGURE 2 comprend une pluralité de moyens d'accueil 202 munis chacun d'un moyen d'émission sans fil d'un signal d'identification et d'une donnée d'identification. Le moyen d'accueil 202 sera plus détaillé dans la suite en référence à la FIGURE 3.

Le système 200 comprend en outre une file d'attente numérique 204 dans laquelle est mémorisée la donnée d'identification d'une pluralité desdits moyens d'accueil. Cette file d'attente numérique 204 est mémorisée dans, ou au niveau d'un, serveur central 206.

Le système 200 comprend également au moins un moyen 208₁-208ₘ de détection sans fil du signal d'identification d'au moins un moyen d'accueil 202. Chaque moyen de détection sans fil peut être un moyen de détection fixe ou un moyen de détection portable tel qu'un smartphone ou une tablette pour détecter un signal d'identification Bluetooth ® émis par chaque moyen d'accueil 202.

Le système peut optionnellement comprendre un moyen 210 de lecture, en particulier de lecture optique ou par radiofréquence, d'une donnée d'identification depuis un/chaque moyen d'accueil 202 et communiquer chaque donnée d'identification lue au serveur central 206.

Le système comprend en outre un moyen 212 d'émission vers le moyen d'accueil d'un signal d'appel, reçu par le moyen d'accueil grâce à une antenne de réception (non représentée sur la FIGURE 2).

Le moyen d'émission 212, et/ou le moyen de lecture 210, peut être intégré dans un moyen de détection 208, également appelé balise.

Le serveur central 206 comprend un ou plusieurs processeurs, non représenté(s), comprenant des instructions informatiques pour exécuter les étapes du procédé selon l'invention, tel que par exemple le procédé 100 de la FIGURE 1, et notamment pour :
- recevoir et mémoriser une donnée d'identification d'un ou plusieurs moyen d'accueil dans la file d'attente 204,
- sélectionner à tour de rôle une donnée d'identification depuis la file d'attente dans l'ordre temporel de leur mémorisation dans la file d'attente.
- déclencher l'émission d'un signal d'appel vers le moyen d'accueil, et
- localiser, ou participer à la localisation, d'un moyen d'accueil en fonction des signaux reçus par le ou les moyens de détection 208.

La FIGURE 3 est une représentation schématique d'un exemple non limitatif d'un moyen d'accueil selon l'invention, tel que par exemple le moyen d'accueil 202 de la FIGURE 2.

Le moyen d'accueil 202 représenté sur la FIGURE 3 se présente sous la forme d'une carte, d'épaisseur négligeable.

Le moyen d'accueil 202 comporte sur une de ses faces un code barre 302₁ représentant la donnée d'identification du moyen d'accueil et prévu pour être lue par un lecteur optique. Alternativement ou en plus, le moyen d'accueil peut comporter un moyen d'identification RFID 302₂ pouvant être lue par un lecteur RFID ou un lecteur radiofréquence.

Le moyen d'accueil 202 comporte en outre une antenne 304 d'émission sans fil d'un signal d'identification, tel qu'une antenne Bluetooth ® ou plus généralement une antenne d'émission radio fréquence (RF).

Le moyen d'accueil 202 comprend en outre une antenne 306 de réception sans fil d'un signal d'appel, telle qu'une antenne de réception Bluetooth ®, ou plus généralement une antenne de réception sans fil..

Le moyen d'accueil 202 peut optionnellement comprendre en outre :
- un moyen 308 de signalisation lumineux qui dans l'exemple présent comprend quatre diodes de couleurs différentes,
- un moyen 310 de signalisation sonore qui dans l'exemple présent comprend un haut-parleur,
- un moyen 312 de signalisation par vibration qui dans l'exemple présent comprend un piézoélectrique,
- un moyen 314 de déclenchement de l'émission ou non du signal d'identification, tel qu'un bouton mécanique ou un bouton tactile, et
- un moyen de mémorisation 316 pour mémoriser diverses données, telles que par exemple des données de génération du signal d'identification, des données représentant le ou les signaux d'appel pouvant être reçu(s) par le moyen d'identification, etc.

Le moyen d'accueil 202 comprend en outre une batterie 318 pour alimenter l'ensemble des composants du moyen d'accueil 202 et une puce électronique 320 pour gérer le fonctionnement de l'ensemble des composants du moyen d'accueil.

Le moyen d'accueil 202 peut en outre comprendre un moyen de détection automatisée de la prise ou de l'attribution dudit moyen d'accueil à un utilisateur. Un tel moyen de détection automatisée peut comprendre un ou plusieurs accéléromètre(s) 322, un capteur magnétique tel qu'un capteur à effet Hall coopérant, un capteur optique, etc.

Bien sûr, l'invention n'est pas limitée aux exemples qui viennent d'être décrits et de nombreux aménagements peuvent être apportés à ces exemples sans sortir du cadre de l'invention.

## Revendications

1. Procédé (100) de gestion de l'accueil de personnes dans un lieu, ledit procédé (100) comprenant :
- lors d'une phase, dite de délivrance :
- attribution (102) à au moins une personne d'un moyen (202), dit d'accueil, dans ledit lieu, le ou chaque moyen d'accueil (202) étant apte à émettre de manière sans fil un signal d'identification,
- lecture (104) d'une donnée d'identification dudit moyen d'accueil (202), et
- inscription (106) de ladite donnée d'identification dans une file d'attente (204) mémorisée dans un moyen de mémorisation ;
- lors d'une phase, dit d'appel :
- sélection (110) de ladite donnée d'identification dans la file d'attente (204), et
- détection (116) dudit moyen d'accueil (202) en fonction de ladite donnée d'identification et dudit signal d'identification ;
**caractérisé en ce qu'**il comprend en outre une détection automatisée de ladite attribution dudit moyen d'accueil à un utilisateur, ladite détection déclenchant ladite étape de lecture et ladite étape d'inscription.

2. Procédé selon la revendication précédente, **caractérisé en ce que** l'étape d'attribution d'un moyen d'accueil comprend :
- une prise, par un utilisateur, dudit moyen d'accueil en libre-service,
- une distribution dudit moyen d'accueil par un opérateur, ou
- une distribution dudit moyen d'accueil par un distributeur automatique.

3. Procédé (100) selon l'une quelconque des revendications précédentes, **caractérisé en ce qu'**il comprend en outre :
- une étape (114) d'émission, vers ledit moyen d'accueil (202), d'un signal, dit d'appel, et
- une étape (118) de signalisation sonore ou visuelle ou par vibration, par ledit moyen d'accueil (202), suite à la réception dudit signal d'appel.

4. Procédé (100) selon la revendication précédente, **caractérisé en ce que** le signal d'appel comprend un identifiant d'un point service ou d'un opérateur, l'étape (118) de signalisation sonore ou visuelle ou par vibration étant fonction dudit identifiant.

5. Procédé (100) selon l'une quelconque des revendications précédentes, **caractérisé en ce qu'**il comprend, lors de la phase de délivrance, une étape (108) d'activation, manuelle ou automatisée, d'un moyen (304) d'émission sans fil du signal d'identification du moyen d'accueil (202).

6. Procédé selon l'une quelconque des revendications précédentes, **caractérisé en ce que** l'étape de lecture de la donnée d'identification comprend une émission/transmission de ladite donnée d'identification dudit moyen d'accueil vers un serveur, de manière sans fil.

7. Procédé (100) selon l'une quelconque des revendications 1 à 5, **caractérisé en ce que** l'étape (104) de lecture de la donnée d'identification comprend :
- une lecture optique d'un moyen (302) d'identification visuelle, de type code à barres, et/ou
- une lecture par radiofréquence, tel que par exemple par RFID ;
de la donnée d'identification depuis le moyen d'accueil (202).

8. Procédé (100) selon l'une quelconque des revendications précédentes, **caractérisé en ce qu'**il comprend, lors de la phase d'appel, une étape (116) de localisation dudit moyen d'accueil (202) en fonction :
- de la force du signal d'identification émis par le moyen d'accueil (202), et/ou
- de la force d'une signalisation sonore ou visuelle au niveau dudit moyen d'accueil (202).

9. Procédé (100) selon l'une quelconque des revendications précédentes, **caractérisé en ce que** l'étape (102) d'attribution du moyen d'accueil (202) comprend une sélection par la personne d'un moyen d'accueil (202) au niveau d'un point de distribution.

10. Procédé (100) selon l'une quelconque des revendications précédentes, **caractérisé en ce que** l'émission du signal d'identification est réalisée selon le standard de communication Bluetooth.

11. Procédé (100) selon l'une quelconque des revendications précédentes, **caractérisé en ce qu'**il comprend, suite à la phase d'appel, une phase de restitution du moyen d'accueil, ladite phase comprenant :
- une étape (120) de remise du moyen d'accueil (202), et
- éventuellement, une étape (122) de désactivation d'un moyen d'émission sans fil du moyen d'accueil.

12. Système (200) de gestion d'accueil de personnes dans un lieu, ledit système (200) comprenant :
- une pluralité de moyens (202), dits d'accueil, munis chacun d'un moyen (304) d'émission sans fil d'un signal d'identification et d'une donnée d'identification (302),
- une file (204) d'attente pour mémoriser la donnée d'identification d'une pluralité desdits moyens d'accueil (202),
- au moins un moyen (208) de détection sans fil dudit signal d'identification d'au moins un moyen d'accueil (202), et
- un serveur central (206) ;
configurés pour mettre en oeuvre toutes les étapes du procédé (100) selon l'une quelconque des revendications précédentes.

13. Système (200) selon la revendication précédente, **caractérisé en ce que** l'au moins un moyen d'accueil comprend un moyen de détection automatisée de l'attribution dudit moyen d'accueil à un utilisateur.

14. Système (200) selon la revendication précédente, **caractérisé en ce que** l'au moins un moyen de détection automatisée de l'attribution dudit moyen d'accueil à un utilisateur comprend un capteur actif équipant ledit moyen d'accueil, et prévu pour coopérer avec un moyen passif équipant un socle, ou un support, recevant ledit moyen d'accueil avant qu'il ne soit attribué à un utilisateur.

15. Système (200) selon l'une quelconque des revendications 13 ou 14, **caractérisé en ce que** l'au moins un moyen de détection automatisée de l'attribution dudit moyen d'accueil à un utilisateur comprend un capteur à effet Hall équipant ledit moyen d'accueil, et prévu pour coopérer avec un aimant équipant un socle, ou un support, recevant ledit moyen d'accueil avant qu'il ne soit attribué à un utilisateur.

16. Système (200) selon l'une quelconque des revendications 12 à 15, **caractérisé en ce que** l'au moins un moyen de détection (208) sans fil du signal d'identification comprend un moyen de détection portable, utilisable par un opérateur.

17. Système (200) selon l'une quelconque des revendications 12 à 16, **caractérisé en ce qu'**au moins un moyen d'accueil (202) comprend un moyen (306) de réception sans fil d'un signal d'appel et au moins un moyen (308,310,312) de signalisation sonore ou visuel ou par vibration.

18. Système (200) selon l'une quelconque des revendications 12 à 17, **caractérisé en ce que** l'au moins un moyen d'accueil comprend un écran d'affichage utilisant la technologie du papier électronique.

19. Système (200) selon l'une quelconque des revendications 12 à 18, **caractérisé en ce qu'**il comprend un socle, ou un support, prévu pour recevoir au moins un moyen d'accueil, avant l'attribution dudit moyen d'accueil à un utilisateur.

20. Système (200) selon la revendication précédente, **caractérisé en ce que** le socle est équipé d'un élément passif, prévu pour coopérer avec un capteur actif équipant au moins un moyen d'accueil, pour réaliser une détection automatisée de l'attribution dudit moyen d'accueil à un utilisateur.
